# EUROPÄISCHE PATENTSCHRIFT

(11) **EP 0 431 509 B1**
(45) Veröffentlichungstag und Bekanntmachung des Hinweises auf die Patenterteilung: **01.09.1993**
(21) Anmeldenummer: 90123072.2
(22) Anmeldetag: 03.12.1990
(51) Int. Cl.: F01N 3/02, B03C 3/00

(54) **Verfahren und Vorrichtung zur Entfernung von Russ und kondensierbaren Bestandteilen aus Dieselabgasen**
Method and arrangement for removing soot and condensible components from diesel exhaust gases
Méthode et dispositif d'élimination de la suie et de composants condensables de gaz d'échappement de moteur diesel

(30) Priorität: 08.12.1989 DE 3940677
(43) Veröffentlichungstag der Anmeldung: 12.06.1991
(73) Patentinhaber: KRAMB MOTHERMIK GmbH & CO. KG, D-55469 Simmern (DE)
(72) Erfinder: Kramb, Jan Dipl.-Ing. (FH), W-6540 Simmern (DE)
(74) Vertreter: Lorenzen, Knud, Dipl.-Chem. Dr.

(56) Entgegenhaltungen:
- EP-A- 0 346 803
- WO-A-84/02181
- GB-A- 323 186
- GB-A- 923 431
- US-A- 4 685 291

## Beschreibung

Die Erfindung betrifft ein Verfahren und eine Vorrichtung zur Entfernung von Ruß und kondensierbaren Bestandteilen aus Abgasen von Dieselmotoren.

Aus der EP 0 126 737 B1 ist ein Verfahren zur Reinigung von Wärmetauschern für Motorenabgase, insbesondere auch aus Dieselmotoren bekannt, bei welchem die Abgase an gekühlten Oberflächen von Wärmetauschern abgekühlt werden, wobei sich Rußteilchen und flüchtige, kondensierbare Bestandteile aus den Abgasen auf den gekühlten Wärmetauscherflächen abscheiden, und diese Oberflächen der Wärmetauscher nach ihrer weitgehenden oder vollständigen Sättigung mit abgeschiedenem Ruß und abgeschiedenen, kondensierten Bestandteilen durch Selbstaufheizung und Selbstentzündung wieder gereinigt werden. Eine vollständige Entfernung von Ruß und flüchtigen, kondensierbaren Bestandteilen aus den Abgasen ist hiermit jedoch nicht möglich.

Weiterhin ist aus der GB-PS 923 431 ein Verfahren zur Entfernung von Ruß und flüchtigen, kondensierbaren Bestandteilen aus Abgasen von Dieselmotoren bekannt, bei welchem die heißen Abgase des Dieselmotors in einem Wärmeabtauscher unter teilweiser Abscheidung von Ruß und flüchtigen, kondensierbaren Bestandteilen auf den kalten oder gekühlten Flächen des Wärmetauschers gekühlt werden und an den gekühlten Abgasen eine weitere Abscheidung von restlichem Ruß und flüchtigen, kondensierten Bestandteilen auf weiteren Ablagerungsflächen, insbesondere auch in einer elektrostatischen Abscheideeinrichtung, durchgeführt wird. In dieser GB-PS 923 431 ist über eine Regenerierung der Wärmetauscher jedoch nichts ausgesagt.

Weiterhin ist in der nicht vorveröffentlichten europäischen Patentanmeldung EP-A-0 346 803 der Anmelderin ein Verfahren und eine Vorrichtung zur kontinuierlichen Entfernung von Ruß und flüchtigen, kondensierbaren Bestandteilen aus Abgasen von Dieselmotoren beschrieben, bei welchem die heißen Abgase des Dieselmotors wechselweise durch zwei Wärmetauscher mit primärseitigen Kühlflächen und sekundärseitig mit einem Wärmetransportmedium beaufschlagbaren Flächen geführt werden, wobei der mit Rußteilchen und kondensierten Bestandteilen teilweise oder vollständig belegte Wärmetauscher jeweils durch Abschalten des Wärmetransportmediums sich aufheizen und abbrennen gelassen wird, während die Reinigung der heißen Abgase in dem anderen Wärmetauscher erfolgt und anschliessend die mit restlichem Ruß und kondensierten Bestandteilen beladenen, gekühlten Abgase durch Einrichtungen zur elektrostatischen Abscheidung geführt werden.

Aufgabe der vorliegenden Erfindung ist ein Verfahren zur Entfernung von Ruß und kondensierbaren Bestandteilen aus Dieselabgasen, das kontinuierlich durchgeführt werden kann und bei dem nur eine Einrichtung zur elektrostatischen Abscheidung erforderlich ist, wobei die Regenerierung von mit Ruß und kondensierten Bestandteilen beladenen Wärmetauschern bei ununterebrochenem Betrieb des Dieselmotors und unter fortwährendem Betrieb und damit Wirksamkeit der Einrichtung zur elektrostatischen Abscheidung durchgeführt werden kann.

Zur Lösung dieser Aufgabe dient das Verfahren, wie es im Oberbegriff des Anspruchs 1 beschrieben und dadurch gekennzeichnet ist, daß die Abgase der einzelnen Zylinder des Dieselmotors getrennt in mehrere, voneinander unabhängig auf Kühlung oder Aufheizung schaltbare Wärmetauscher geführt werden und jeweils nur ein Wärmetauscher nach seiner Beladung sich aufheizen und abbrennen gelassen wird, wobei die gekühlten Abgase der anderen, auf Kühlung geschalteten Wärmetauscher und die Abgase aus dem auf Regenerieren geschalteten Wärmetauscher vor der Einleitung in die elektrostatische Abscheideeinrichtung wiedervereinigt werden.

Gemäß einer vorteilhaften Ausführungsform wird bei den Zylindern des Dieselmotors, deren Abgase in einen auf Regenerieren geschalteten Wärmetauscher geführt werden, eine Düsenabschaltung der Einspritzung von Dieselkraftstoff nach dem Regeneriervorgang zur besseren Abkühlung des Wärmetauschers durchgeführt.

Gemäß einer weiteren bevorzugten Ausführungsform wird jeweils ein Wärmetauscher für einen oder zwei Zylinder des Dieselmotors eingesetzt, d.h. bei einem Sechszylinder-Dieselmotor werden entweder drei Wärmetauscher für jeweils zwei Zylinder oder auch sechs Wärmetauscher für jeden einzelnen Zylinder eingesetzt.

Die Erfindung betrifft weiterhin eine Vorrichtung zur Durchführung eines solchen Verfahrens, welche mehrere Wärmetauscher, eine elektrostatische Abscheideeinrichtung sowie weitere übliche Einrichtungen zum Führen der Abgase und zum Zu- und Abschalten der Wärmetauscher umfaßt, wobei diese dadurch gekennzeichnet ist, daß einzelnen Zylindern des Dieselmotors jeweils ein Wärmetauscher zugeordnet ist. Hierbei kann entweder einem oder zwei Zylindern des Dieselmotors jeweils ein Wärmetauscher zugeordnet sein.

Die Erfindung wird im folgenden näher erläutert.

Bei dem erfindungsgemäßen Verfahren werden Wärmetauscher eingesetzt, bei denen auf den gekühlten primärseitigen Flächen eines sekundärseitig gekühlten Wärmetauschers ein Teil des Rußes und der kondensierbaren Bestandteile aus den heißen Dieselabgasen unter gleichzeitiger Kühlung dieser Dieselabgase abgeschieden wird. Bei der Regenerierung eines solchen Wärmetauschers ist der Vorteil einer relativ niedrigen Zündtemperatur beim Aufheizen und Abbrennenlassen gegeben, da die primärseitig kondensierten, flüchtigen Bestandteile aus den Abgasen eine wesentlich niedrigere Zündtemperatur als Ruß besitzen, so daß sie mit den heißen Abgasen des Dieselmotors leicht zur Selbstentzündung gebracht und damit abbrennen gelassen werden können, wobei gleichzeitig der Ruß, der üblicherweise eine wesentlich höhere Selbstentzündungstemperatur besitzt, abbrennt.

Unter kondensierbaren Bestandteilen der Abgase sind alle die flüchtigen Bestandteile, d.h. im wesentlichen Kohlenwasserstoffe, zu verstehen, die bei Temperaturen, wie sie an den Wärmetauscheroberflächen herrschen, kondensierbar sind.

Die Selbstentzündungstemperatur beim Regenerieren der Wärmeaustauscher kann bei so niedrigen Werten wie 300°C liegen.

Die Wärmetauscher, wie sie erfindungsgemäß eingesetzt werden, können sowohl mit gasförmigen Wärmetransportmedien, z.B. Luft, wie auch mit flüssigen Medien, vorteilhafterweise Wasser, gekühlt werden. Im folgenden wird die Regenerierung eines solchen Wärmetauschers näher beschrieben.

Nach vollständiger oder teilweiser Sättigung der Wärmetauscherflächen mit abgeschiedenem Ruß und kondensierten Bestandteilen wird dann das auf der Sekundärseite des Wärmetauschers durchströmende Wärmetransportmedium, das sowohl ein Gas als auch eine Flüssigkeit sein kann, d.h. insbesondere Luft oder Wasser, gegebenenfalls mit einem Frostschutzmittel versetzt, abgeschaltet oder unterbrochen, so daß der Wärmetauscher durch das heiße Abgas fortschreitend auf eine höhere Temperatur gebracht wird. Falls das sekundärseitig eingesetzte Wärmetransportmedium eine Flüssigkeit, z.B. Wasser, ist, muß die Möglichkeit geschaffen werden, daß dieses Wärmetransportmedium entweder vorher aus der Sekundärseite des Wärmetauschers abgelassen wird oder hieraus entweichen kann, damit der Wärmetauscher auf eine ausreichend hohe Temperatur durch das heiße Abgas aufgeheizt werden kann und das flüssige Wärmetransportmedium nicht verdampft oder sich zersetzt. Bei Verwendung eines gasförmigen sekundären Wärmetransportmediums reicht es selbstverständlich aus, daß der Durchfluß des Wärmetransportmediums durch die Sekundärseite des Wärmetauschers unterbrochen wird. Nachdem der Wärmetauscher sich auf eine ausreichend hohe Temperatur erhitzt hat, z.B. 300°C, erfolgt eine Selbstzündung auf der Primärseite des Wärmetauschers, d.h. auf den primärseitigen Wärmetauscherflächen abgeschiedener Ruß und hierauf kondensierter Bestandteile verbrennen, da in den heißen Abgasen von Dieselmotoren immer eine Sauerstoffrestmenge enthalten ist. Nach ausreichender Selbstreinigung, d.h. möglichst vollständigem Abbrennen des Rußes und der kondensierten Bestandteile von den primärseitigen Wärmetauscherflächen, kann die Zirkulation des Wärmetransportmediums auf der Sekundärseite des Wärmetauschers wieder aufgenommen werden, z. B. im Fall eines flüssigen Wärmetransportmediums, für welches die sekundärseitigen Wärmetauscherflächen noch zu heiß sind, nach geeigneter Abkühlung dieser sekundärseitigen Wärmetauscherflächen des Wärmetauschers, z.B. durch Durchleiten von Luft, oder durch Selbstabkühlung nach Unterbrechen des Durchströmens heißer Abgase, kann der Wärmetauscher insgesamt wieder gekühlt werden, so daß der Wärmetauscher wieder zur Kühlung und teilweisen Reinigung der Dieselabgase zur Verfügung steht.

Bei dem erfindungsgemäßen Verfahren wird immer nur ein Wärmetauscher regeneriert, während die anderen Wärmetauscher weiterhin zur Abkühlung und teilweisen Reinigung der Dieselabgase aus den übrigen Zylindern eingesetzt sind.

Bei der Regenerierung eines Wärmetauschers bilden sich während des Abbrennens natürlich heiße Abgase, diese werden jedoch durch die gekühlten Abgase aus den anderen Wärmetauschern so weit abgekühlt, daß die elektrostatische Abscheideeinrichtung kontinuierlich weiter wirksam ist, d.h. die für eine elektrostatische Abscheidung schädliche Höchsttemperatur von z.B. 80°C, kann vermieden werden.

Um die Temperatur der gekühlten Abgase aus in Betrieb befindlichen Wärmetauschern und heißen Abgasen des Abbrennens nicht übermäßig ansteigen zu lassen, hat es sich als vorteilhaft herausgestellt, nach der Zündung des Abbrennens in dem zu regenerierenden Wärmetauscher die Einspritzung von Dieselkraftstoff in den Zylinder oder die Zylinder, welche Abgas zu dem in Regeneration befindlichen Wärmetauscher abgeben, abzuschalten, so daß eine Aufheizung durch Zufuhr von heißen Abgasen aus dem Zylinder oder den Zylindern des Dieselmotors dieses betreffenden Wärmetauschers nicht erfolgt. Eine solche Abschaltung der Einspritzung von Dieselkraftstoff ist auch vorteilhaft, da nach dem Abbrennen des Wärmetauschers ein Abkühlen dieses Wärmetauschers erfolgt, was insbesondere im Fall der Verwendung eines flüssigen Wärmetransportmediums, z.B. von Wasser oder gegebenenfalls mit Frostschutzmittel versetztes Wasser, von Vorteil ist.

Die weitere Reinigung der aus den Wärmetauschern austretenden Abgase erfolgt mittels elektrostatischer Aufladung und Abscheidung von Rußteilchen und kondensierten Bestandteilen. Hierzu können die üblicherweise verwendeten elektrostatischen Abscheider verwendet werden, wie sie z.B. als elektrostatische Filter in den VDI-Berichten 559, Seite 102/103, beschrieben sind. Die elektrostatische Abscheidung kann als sogenannte "stille Entladung", bevorzugt jedoch als sogenannte "Sprühentladung" oder "Koronaentladung" durchgeführt werden. Eine solche Sprühentladung kann bei Spannungen von 5 bis 30 kV erreicht werden, falls eine geeignete Sprühelektrode oder Aufladungselektrode, vorteilhafterweise in Form eines dünnen Drahtes von z.B. 0,2 mm Durchmesser in einem geeigneten Sammelrohr, das runden oder auch rechteckigen Querschnitt haben kann und als Sammelelektrode dient, eingesetzt wird. Geeignete Längen der Sammelelektrode dienenden Rohre liegen zwischen 0,3 und 1,5 m. Bevorzugt sollte die Strömungsgeschwindigkeit der Abgase unter 2 m/sec liegen und die Kontaktzeit wenigstens 0,5 sec in der Einrichtung zur elektrostatischen Abscheidung betragen.

Die Erfindung wird anhand der Schemazeichnung näher erläutert; in dieser Aufsicht ist ein Dieselmotor 2 in Aufsicht gezeigt, welcher zehn Einzelzylinder 1 hat. Diesen Einzelzylindern ist jeweils ein Wärmetauscher 3 zugeordnet, wobei jeder Wärmetauscher auf Kühlung oder Regenerieren geschaltet sein kann. Die Schaltung auf Regenerieren erfolgt durch Abschalten des Wärmetransportmediums auf der Sekundärseite des Wärmetauschers, wobei die Zuleitung hierfür mit 8 und die Ableitung hiervon mit 9 bezeichnet ist. 4 stellt die Einrichtung zur elektrostatischen Abscheidung dar und 5 sind die Abgasrohre, die aus den Wärmetauschern zur Vereingiungystelle 6 führen, von wo aus die Abgase in die Einrichtung 4 eintreten, und 7 stellt das Auspuffrohr dar, das zur Atmosphäre führt. Bei Versuchen hat sich herausgestellt, daß ein Reinigungszyklus eines Wärmetauschers nach Fahrtstrecken von etwa 200 bis 1000 km erforderlich ist.

### Bezugszeichenaufstellung

- 1: Einzelzylinder
- 2: Dieselmotor
- 3: Wärmetauscher
- 4: elektrostatische Abscheideeinrichtung
- 5: Abgasrohre aus Einzelwärmetauschern
- 6: Vereinigungsstelle der Abgasrohre
- 7: Auspuffrohr in Atmosphäre
- 8: Zuleitung Wärmetransprotmedium
- 9: Ableitung Wärmetransportmedium

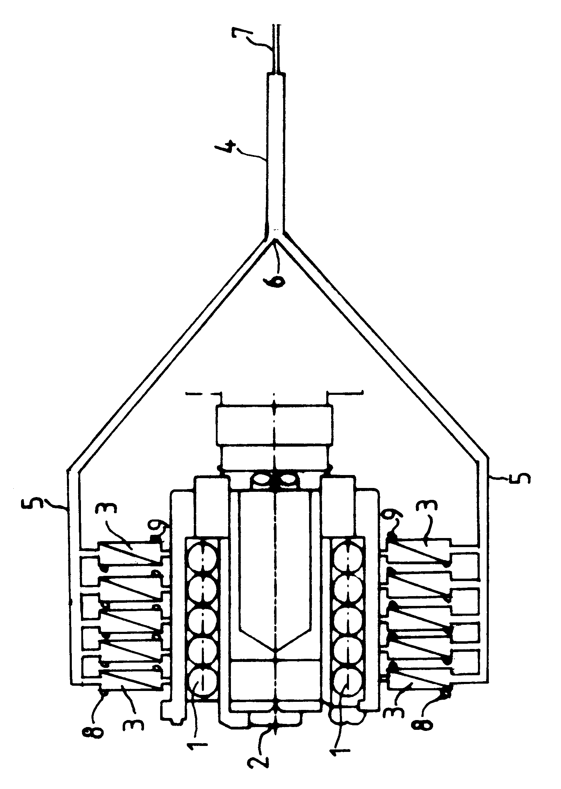

## Patentansprüche

1. Verfahren zur Entfernung von Ruß und kondensierbaren Bestandteilen aus Dieselabgasen, bei welchem die heißen Dieselabgase in Wärmetauschern unter teilweiser Abscheidung gekühlt werden und anschließend in einer elektrostatischen Abscheideeinrichtung weiter gereinigt werden, wobei mehrere Wärmetauscher wechselweise eingesetzt werden, nämlich regenerierte Wärmetauscher zum Kühlen und teilweisen Abscheiden von Ruß und kondensierbaren Bestandteilen und beladene Wärmetauscher zum Regenerieren durch Abschalten des Wärmetransportmediums zum Aufheizen und Abbrennen von abgeschiedenem, Ruß und kondensierten Bestandteilen,
wobei
die Abgase der einzelnen Zylinder des Dieselmotors getrennt in mehrere, voneinander unabhängig auf Kühlung oder Aufheizung schaltbare Wärmetauscher geführt werden und jeweils nur ein Wärmetauscher nach seiner Beladung sich aufheizen und abbrennen gelassen wird, wobei die gekühlten Abgase der anderen, auf Kühlung geschalteten Wärmetauscher und die Abgase aus dem auf Regenerieren geschalteten Wärmetauscher vor der Einleitung in die elektrostatische Abscheideeinrichtung wiedervereinigt werden.

2. Verfahren nach Anspruch 1,
dadurch gekennzeichnet, daß
bei den Zylindern des Dieselmotors, deren Abgase in einen auf Regenerieren geschalteten Wärmetauscher geführt werden, eine Düsenabschaltung der Einspritzung von Dieselkraftstoff nach dem Regeneriervorgang zur besseren Abkühlung des Wärmetauschers durchgeführt wird.

3. Verfahren nach einem der Ansprüche 1 oder 2,
dadurch gekennzeichnet, daß jeweils ein Wärmetauscher für einen oder zwei Zylinder des Dieselmotors eingesetzt wird.

4. Vorrichtung zur Durchführung des Verfahrens nach einem der vorhergehenden Ansprüche, umfassend mehrere Wärmetauscher, eine elektrostatische Abscheideeinrichtung sowie weitere übliche Einrichtungen zum Führen der Abgase und zum Zu- und Abschalten der Wärmetauscher,
dadurch gekennzeichnet, daß
einzelnen Zylindern (1) des Dieselmotors (2) jeweils ein Wärmetauscher (3) zugeordnet ist.

## Claims

1. Method of removing soot and condensible components from diesel exhaust gases in which the hot diesel exhaust gases are cooled in heat exchangers with partial precipitation and are subsequently cleaned further in an electrostatic precipitator, a plurality of heat exchangers being used in turn, namely regenerated heat exchangers for cooling and partially precipitating soot and rondensible components and loaded heat exchangers for regeneration by switching off the heat transport medium for heating and burning off precipitated soot and condensed components, whereby the exhaust gases from the individual cylinders of the diesel engine are fed separately into a plurality of heat exchangers which"may be switched independently from one another to cooling or heating and in each case only one heat exchanger is permitted to heat up and burn off after it has been loaded, whereby the cooled exhaust gases from the other heat exchangers switched to cooling and the exhaust gases from the heat exchanger switched to regeneration are recombined before being introduced into the electrostatic precipitator.

2. Method as claimed in claim 1, characterised in that in the cylinders of the diesel engine whose exhaust gases are fed into a heat exchanger switched to regeneration a switching off of the nozzle for injecting the diesel fuel is performed after the regeneration process in order better to cool the heat exchanger.

3. Method as claimed in one of claims 1 or 2, characterised in that a respective heat exchanger is used for one or two cylinders of the diesel engine.

4. Apparatus for carrying out the method as claimed in one of the preceding claims including a plurality of heat exchangers, an electrostatic precipitator and further conventional devices for guiding the exhaust gases and for switching the heat exchangers on and off, characterised in that a respective heat exchanger (3) is associated with individual cylinders (1) of the diesel engine (2).

## Revendications

1. Procédé d'élimination des suies et des constituants condensables contenus dans les gaz d'échappement de moteurs Diesel, selon lequel on refroidit les gaz d'échappement dans des échangeurs de chaleur en effectuant une séparation partielle puis on les purifie dans un dispositif de séparation électrostatique, plusieurs échangeurs de chaleur étant utilisés alternativement, à savoir des échangeurs régénérés pour le refroidissement et la séparation partielle des suies et des constituants condensables et des échangeurs de chaleur chargés, à régénérer, par arrêt de la circulation du fluide caloporteur pour chauffer et éliminer par combustion les dépôts de suies et les constituants condensables, procédé dans lequel les gaz d'échappement des différents cylindres du moteur Diesel sont amenés séparément dans plusieurs échangeurs de chaleur qui peuvent être commutés individuellement en mode de refroidissement ou en mode de chauffage et un seul échangeur de chaleur chargé est chauffé et amené en mode de combustion, les gaz d'échappement refroidis des autres échangeurs en phase de refroidissement et les gaz brûlés de l'échangeur de chaleur en phase de régénération étant regroupés avant leur introduction dans le dispositif de séparation électrostatique.

2. Procédé selon la revendication 1, caractérisé par le fait que, afin d'améliorer le refroidissement de l'échangeur de chaleur, à la suite du processus de régénération, on met hors service les injecteurs assurant l'injection de gazole des cylindres dont les gaz d'échappement sont amenés à un échangeur de chaleur commuté en mode régénération.

3. Procédé selon l'une des revendications 1 ou 2, caractérisé par le fait que l'on utilise chaque fois un échangeur de chaleur pour un ou deux cylindres du moteur Diesel.

4. Dispositif pour la mise en oeuvre du procédé selon l'une des revendications précédentes, comprenant plusieurs échangeurs de chaleur, un dispositif de séparation électrostatique ainsi que d'autres dispositifs habituels pour acheminer les gaz d'échappement et pour mettre en service et hors service les échangeurs de chaleur, caractérisé par le fait qu'un échangeur de chaleur (3) est associé à chacun des cylindres (1) du moteur Diesel.
